# EUROPÄISCHE PATENTSCHRIFT

(11) **EP 0 607 254 B1**
(45) Veröffentlichungstag und Bekanntmachung des Hinweises auf die Patenterteilung: **06.09.1995**
(21) Anmeldenummer: 92921315.5
(22) Anmeldetag: 05.10.1992
(51) Int. Cl.: B60L 11/02, B60L 11/12, G05D 13/62

(54) **DREHZAHLERFASSUNG BEI EINER ANTRIEBSANORDNUNG FÜR EIN KRAFTFAHRZEUG**
ROTATION SPEED SENSING IN A DRIVE ARRANGEMENT FOR A MOTOR VEHICLE
CAPTAGE DE LA VITESSE DE ROTATION DANS UNE TRANSMISSION D'UN VEHICULE AUTOMOBILE

(30) Priorität: 10.10.1991 DE 4133622
(43) Veröffentlichungstag der Anmeldung: 27.07.1994
(73) Patentinhaber: MANNESMANN Aktiengesellschaft, 40027 Düsseldorf (DE)
(72) Erfinder: ADLER, Uwe, D-8720 Schweinfurt (DE); DREXL, Hans-Jürgen, D-8724 Schonungen (DE); LUIZ, Dieter, D-8720 Schweinfurt (DE); NAGLER, Franz, D-8729 Ottendorf (DE); OCHS, Martin, D-8720 Schweinfurt (DE); SCHIEBBOLD, Stefan, D-8720 Schweinfurt (DE); SCHMIDT-BRÜCKEN, Hans-Joachim, D-8712 Geldersheim (DE); THIELER, Wolfgang, D-8728 Hassfurt (DE); WAGNER, Michael, D-8721 Niederwerrn (DE); WESTENDORF, Holger, D-8721 Hambach (DE); WYCHNANEK, Reiner, D-8721 Madenhausen (DE)
(74) Vertreter: Meissner, Peter E., Dipl.-Ing.
(86) Internationale Anmeldenummer: DE9200849
(87) Internationale Veröffentlichungsnummer: WO9307024

(56) Entgegenhaltungen:
- EP-A- 0 159 005
- EP-A- 0 340 686
- DE-A- 3 725 620
- DE-A- 3 817 705
- US-A- 4 811 232

## Beschreibung

Die Erfindung betrifft eine Antriebsanordnung für ein Kraftfahrzeug und befaßt sich insbesondere mit der Erfassung von Drehzahlen einer Brennkraftmaschine bzw. von Antriebsrädern des Kraftfahrzeugs.

Bei Antiblockiersystemen (ABS) und Antriebsschlupfregelsystemen (ASR) von Kraftfahrzeugen muß die Drehzahl der Räder sehr exakt erfaßt werden. Bei herkömmlichen Systemen sind in der Nähe der Radlager Drehzahlsensoren angebracht, oder aber es werden spezielle Radlager mit integrierten Drehzahlsensoren verwendet. In jedem Fall ist jedoch ein vergleichsweise hoher konstruktiver Aufwand erforderlich, nicht zuletzt, weil die Drehzahlsensoren im unmittelbaren Radbereich unter extremen Betriebsbedingungen arbeiten müssen. Ähnliche Verhältnisse ergeben sich bei herkömmlichen Antriebsonordnungen für eine genaue Erfassung der Drehzahl der Brennkraftmaschine, deren Kenntnis für die Betriebsregelung der Brennkraftmaschine und eine Motordiagnose erforderlich ist.

Bei herkömmlichen Antriebsanordnungen für Kraftfahrzeuge treibt die Brennkraftmaschine die Antriebsräder über ein mechanisches Getriebe an. Aus "VDI" Berichte Nr. 878, 1991, Seiten 611 bis 622 ist es bekannt, mit der Brennkraftmaschine des Kraftfahrzeugs einen Generator drehfest zu kuppeln, während die Antriebsräder des Kraftfahrzeugs drehfest mit gesonderten, über einen Gleichspannungszweischenkreis aus der Generatoranordnung gespeisten Elektromotoren drehfest verbunden sind. Die Generatoranordnung und die Elektromotore der bekannten Antriebsanordnung umfassen jeweils einen Stator mit einer Vielzahl in Umfangsrichtung gegeneinander versetzter Statorwicklungen und einen Rotor mit einer Vielzahl in Umfangsrichtung gegeneinander versetzter Permanentmagnete. Die Statorwicklungen sind über gesonderte, der Generatoranordnung bzw. den einzelnen Elektromotoren zugeordnete, elektronische Kommutierungsschaltungen an den Gleichspannungszwischenkreis angeschlossen. Zur Steuerung der zeitlichen Reihenfolge der Ströme in den einzelnen Statorwicklungen erzeugen die Kommutierungsschaltungen zeitlich versetzte Impulssignale, die beispielsweise elektronische Schalter schalten. Beispiele derartiger Generatoren bzw. Elektromotoren sind aus der EP-A-0 159 005 bekannt. Kommutierungsschaltungen sind in der EP-A-0 340 686 beschrieben.

Es ist Aufgabe der Erfindung, einen Weg zu zeigen, wie bei einer Antriebsanordnung eines Kraftfahrzeugs mit von Elektromotoren angetriebenen Rädern die Drehzahl der angetriebenen Räder des Kraftfahrzeugs ohne zusätzliche Sensoren allein auf der Grundlage der für die Antriebsanordnung ohnehin erforderlichen Komponenten sehr genau erfaßt werden kann. Insbesondere soll die Antriebsanordnung ohne zusätzliche, im unmittelbaren Radbereich angeordnete Sensoren auskommen.

Die Erfindung geht aus von einer Antriebsanordnung für ein Kraftfahrzeug umfassend mehrere, drehfest mit gesonderten Antriebsrädern des Kraftfahrzeugs gekuppelte, über einen Gleichspannungszwischenkreis aus einer drehfest mit einer Brennkraftmaschine gekuppelte Generatoranordnung oder/und einem Energiespeicher, insbesondere einem Akkumulator gespeiste Elektromotore, wobei die Elektromotore einen Stator mit einer Vielzahl in Umfangsrichtung gegeneinander versetzter Statorwicklungen und einen Rotor mit einer Vielzahl in Umfangsrichtung gegeneinander versetzter Permanentmagnete aufweisen und die Statorwicklungen an den Gleichspannungszwischenkreis über gesonderte, den einzelnen Elektromotoren zugeordnete, elektronische Kommutierungsschaltungen angeschlossen sind, die zur Steuerung der zeitlichen Reihenfolge der in den Statorwicklungen fließenden Ströme zeitlich versetzte Impulssignale erzeugen. Außerdem weist jede Kommutierungsschaltung einen an der Generatoranordnung bzw. dem Elektromotor angeordneten Stellungsgeber auf, der die Relativstellung des Rotors bezogen auf den Stator erfaßt und der die Erzeugungszeitpunkte der Impulssignale steuert, wobei an die Kommutierungsschaltung wenigstens eines der Elektromotore eine Drehzahlermittlungsschaltung angeschlossen ist, die auf Impulssignale der Kommutierungschaltung anspricht und ein die Drehzahl des Antriebsrads repräsentierendes Drehzahlsignal und/oder ein den Drehwinkel des Antriebsrads repräsentierendes Drehwinkelsignal erzeugt.

Der Erfindung liegt der Gedanke zu Grunde, daß die abhängig von Stellungsgebern erzeugten Impulssignale der Kommutierungsschaltung bereits hochgenaue Informationen über die relative Winkellage zwischen Rotor und Stator enthalten, so daß durch Messen der Folgerate der Impulssignale, beispielsweise durch Abzählen der Impulssignale pro Zeiteinheit, sich die Drehzahl auf einfache Weise und sehr genau erfassen läßt. Da Elektromotore und auch Generatoranordnungen des in Rede stehenden Typs in der Regel vergleichsweise viele Pole und damit Statorwicklungen bzw. Permanentmagnete haben, lassen sich auch Drehzahländerungen während eines Bruchteils einer einzigen Umdrehung erfassen. Der Stellungsgeber bildet eine Einheit mit der Generatoranordnung bzw. dem Elektromotor, kann also zusammen mit dessen Stator gekapselt werden. Sensoren, wie sie bisher für sich an den Rädern angeordnet wurden oder beispielsweise im Bereich des Anlasserzahnkranzes des Schwungrads zur Motordrehzahlerfassung vorgesehen waren, können entfallen.

Bei einem Antriebsschlupfregelsystem (ASR) muß ebenso wie bei einem Antiblockierregelsystem (ABS) auch bei relatv geringen Fahrzeuggeschwindigkeiten die volle Funktionsfähigkeit gewährleistet sein. Entsprechend den vergleichsweise geringen Motordrehzahlen fallen dabei in einem Zeitabschnitt weniger Impulssignale an. In gewissen kritischen Fahrsituationen kann es daher vorkommen, daß die tatsächlich erfaßten Impulssignale für eine schnelle Reaktion nicht ausreichen.

Erfindungsgemäß umfaßt daher die Drehzahlermittlungsschaltung Berechnungsmittel, insbesondere Interpolationsmittel und/oder Extrapolationsmittel, die zusätzliche Werte des Drehzahlsignals oder des Drehwinkelsignals abhängig von durch die Impulssignale festgelegten Signal-Stützwerten errechnen. In entsprechender Ausführungsform, die beispielsweise durch eine Impulsratenteilung oder eine Impulsratenvervielfachung mit einem gegebenenfalls von der Änderungsgeschwindigkeit der Folgerate abhängigen Faktor realisiert werden kann, läßt sich die Genauigkeit des Drehzahlsignals deutlich erhöhen, insbesondere bei niedrigerer Fahrzeuggeschwindigkeit. Die Erfindung wird wegen der hohen Genauigkeit, mit der das Drehzahlsignal erzeugt werden kann, vorzugsweise so eingesetzt, daß das Antiblockiersystem und/oder das Antriebsschlupfregelsystem die Änderungsgeschwindigkeit des Drehzahlsignals überwacht und aktivierbar ist, wenn die Änderungsgeschwindigkeit des Drehzahlsignals einer der Drehzahlermittlungsschaltungen einen vorgegebenen Grenzwert übersteigt. Während bei herkömmlichen Aktivierungskriterien solcher Systeme die Drehzahldifferenz zwischen zwei Rädern zum Erkennen eines Radschlupfzustands überwacht wird, geht diese Ausgestaltung der Erfindung von der Überlegung aus, daß eine plötzliche Drehzahländerung eines angetriebenen Rads auf ein "Abreißen" der Radhaftung zurückgeführt werden kann, die Haftungsgrenze des Rads also überschritten wurde. Das Anti-Blockiersystem und/oder das Antriebsschlupfregelsystem wird aktiviert, wenn die Änderungsgeschwindigkeit des Drehzahlsignals einen vorgegebenen Grenzwert übersteigt, wobei das System hierzu zweckmäßigerweise die Größe der Drehzahländerung pro Zeittaktintervall erfaßt.

In einer bevorzugten Ausgestaltung ist das Antriebsschlupfregelsystem dem Antiblockiersystem unterlagert und umfaßt nach dem Prinzip einer kontinuierlichen Schlupfregelung Regelmittel, die den Radschlupf auf einen vorgegebenen Schlupfgrenzwert regeln. Auf diese Weise wird erreicht, daß das Antriebsschlupfregelsystem vor dem Blockieren das Antriebsdrehmoment bereits schlupfabhängig begrenzt hat, so daß auch der durch das Antiblockiersystem durch Dosieren der Bremskraft zu mindernde Schlupf verkleinert wird. Die Schlupfregelung des Antriebsschlupfregelsystems kann beispielsweise auf der Grundlage eines nach Unschärfe-Regeln bzw. "Fuzzy-Logic"-Regeln arbeitenden Regelungsprinzips erfolgen.

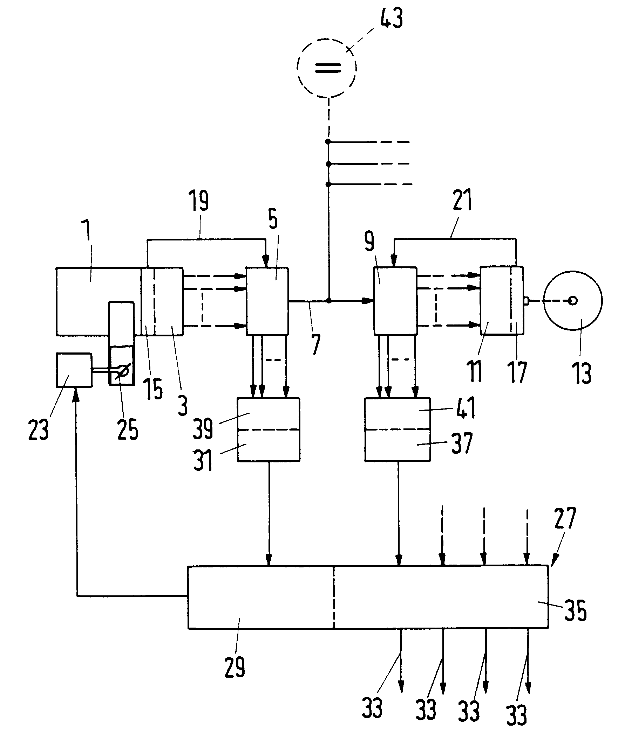

Im folgenden wird ein Ausführungsbeispiel der Erfindung anhand einer Zeichnung näher erläutert. Die Zeichnung zeigt ein Blockschaltbild einer erfindungsgemäßen Antriebsanordnung für ein Kraftfahrzeug.

Die Antriebsanordnung umfaßt eine Brennkraftmaschine 1, die direkt eine an sie angeflanschte Generatoranordnung 3 antreibt. Die Generatoranordnung 3 speist über eine elektronische Kommutierungsschaltung 5 einen Gleichstromzwischenkreis 7, an den über jeweils zugeordnete, elektronische Kommutierungsschaltungen 9 mehrere Elektromotore 11 angeschlossen sind, von denen jeder eines der Räder 13 des Kraftfahrzeugs antreibt. Die Zeichnung zeigt lediglich eines der Räder 13 mit dem drehfest damit verbundenen Elektromotor 11 und der zugeordneten Kommutierungsschaltung 9.

Sowohl die Generatoranordnung 3 als auch jeder Elektromotor 11 umfassen einen vielpoligen, nicht näher dargestellten Stator mit einer Vielzahl z. B. 18 gesonderter Statorwicklungen und einen ebenfalls nicht dargestellten Rotor mit einer Vielzahl Permanentmagnete. Ein Beispiel eines solchen Generators bzw. Elektromotors ist in der EP-A-0 159 005 beschrieben. Sowohl die Generatoranordnung 3 als auch jeder der Elektromotore 11 umfaßt einen Stellungsgeber 15 bzw. 17, der die momentane Winkelposition des Rotors relativ zum Stator erfaßt und über Leitungen 19 bzw. 21 Winkelstellungssignale an die jeweils zugeordnete Kommutierungssteuerung 5 bzw. 9 abgibt. Die Kommutierungssteuerungen 5, 9 enthalten den einzelnen Statorwicklungen zugeordnete elektronische Schalter, die abhängig von den Winkelstellungssignalen der Stellungsgeber 15, 17 die in den Statorwicklungen fließenden Ströme in der durch die Wicklungsanordnung festgelegten Reihenfolge zeitlich versetzt ein- bzw. ausschalten. Die Kommutierungsschaltungen 5, 9 erzeugen hierzu eine Vielzahl Impulssignale für die Steuerung der den einzelnen Statorwicklungen zugeordneten Schalter. Ein Beispiel einer solchen Kommutierungsschaltung ist in der EP-A-0 340 686 beschrieben.

Die Antriebsanordnung umfaßt eine die Leistung der Brennkraftmaschine 1 über einen Stellantrieb 23 eines Leistungsstellglieds 25, beispielsweise einer Drosselklappe oder einer Einspritzpumpe steuernde Steuerung 27, beispielsweise in Form eines Mikroprozessors oder dergleichen. Die Steuerung 27 umfaßt herkömmliche Mittel 29 zur Kennfeldsteuerung der Brennkraftmaschine 1 abhängig von einem aus einer Drehzahlermittlungsschaltung 31 zugeführten, die Drehzahl der Brennkraftmaschine 1 repräsentierenden Drehzahlsignal. Die Steuerung 27 umfaßt ferner Regelungsmittel eines Antriebsschlupfregelsystems (ASR), welches in nicht näher dargestellter Weise entweder über die Leistungsregelung der Brennkraftmaschine 1 oder über die von der Generatoranordnung 3 erzeugte elektrische Leistung oder über die den Elektromotoren 11 zugeführte elektrische Leistung das Antriebsdrehmoment des oder der schlupfenden Räder begrenzt. Die Steuerung 27 umfaßt ferner Regelungsmittel eines Antiblockiersystems (ABS), welches über Steuerausgänge 33 das auf die Räder 13 wirkende Bremsmoment steuert. Die in der Zeichnung bei 35 angedeuteten Regelmittel dieser Systeme sprechen für jedes Rad 13 gesondert auf Drehzahlsignale an, die aus gesonderten Drehzahlermittlungsschaltungen 37, von denen lediglich eine dargestellt ist, zugeführt werden.

Die Drehzahlermittlungsschaltungen 31, 37 sprechen auf die von den Kommutierungsschaltungen 5, 9 abhängig von den durch die Stellungsgeber 15, 17 bestimmten Zeitpunkten erzeugten Impulssignale an und ermitteln aus der Folgerate der Impulssignale das der Steuerung 27 zugeführte Drehzahlsignal. Auf diese Weise erübrigen sich weitere die Drehzahl der Brennkraftmaschine 1 bzw. der Räder 13 direkt erfassende Drehzahlsensoren. Die Drehzahlermittlungsschaltungen 31, 37, die Bestandteil der Steuerung 27 sein können, umfassen zusätzliche Mittel 39 bzw. 41 für die Interpolation oder Extrapolation zusätzlicher Drehzahlsignalwerte abhängig von Stützwerten des Signalverlaufs, die durch die Impulssignale der Kommutierungsschaltungen 5, 9 festgelegt werden. In ihrer einfachsten Form können die Interpolations- oder Extrapolationsmittel durch Impulsratenvervielfacher- oder -teilerschaltungen gebildet sein, die die Rate, mit der die Impulssignale aufeinanderfolgen, um einen vorgegebenen Faktor vervielfachen oder teilen. Zweckmäßigerweise hängt der Faktor jedoch von der Änderungsgeschwindigkeit des durch die Stützwerte bestimmten Drehzahlsignals ab, um so auch bei zeitlich sich ändernden Drehzahlsignalen die Genauigkeit zu erhöhen.

Die Regelmittel 35 erfassen abhängig von jedem einzelnen der Drehzahlsignale einen "Abriß" der Momentenübertragung des Rads 13 auf die Fahrbahn. Überschreitet die Änderungsgeschwindigkeit der Raddrehzahl einen vorgegebenen Grenzwert, so wird dies als Erreichen der Radhaftungsgrenze interpretiert und während einer Antriebsphase zur Aktivierung der Antriebsschlupfregelung bzw. während einer Bremsphase zur Aktivierung der Antiblockierregelung ausgenutzt. Die Antriebsschlupfregelung arbeitet nach dem Prinzip einer kontinuierlichen Schlupfregelung und hält den Schlupf innerhalb eines festgelegten Schlupfregelbereichs auf einem vorgegebenen Schlupfgrenzwert. Geeignet ist die Anwendung von Unschärfe-Regeln (Fuzzy Logic) für die Antriebsschlupfregelung, was der Simulation eines veränderlichen Reibbeiwerts oder dem Aufprägen einer veränderlichen Rauhheit der Fahrbahn auf das Regelsystem entspricht. Die kontinuierlich auf einen Schlupfgrenzwert regelnde Antriebsschlupfregelung greift der Antiblockierregelung vor und verhindert allzu starkes Anwachsen des Schlupfs vor dem Blockieren des Rads beim Bremsen, erlaubt also besseres Dosieren der Bremskraft.

Es versteht sich, daß die Drehzahlermittlungsschaltungen 31, 37 auch zur Ermittlung des Drehwinkels herangezogen werden können und dementsprechend Drehwinkelsignale an die Steuerung 27 abgeben.

Gestrichelt eingezeichnet ist eine Variante der Antriebsanordnung, bei der die elektrische Leistung den Gleichspannungszwischenkreis 7 aus einem als Akkumulator oder Batterie ausgebildeten Energiespeicher 43 zugeführt wird. Der Energiespeicher 43 kann zusätzlich zur Generatoranordnung 3 vorgesehen sein, so daß die Elektromotore 13 wahlweise aus der Generatoranordnung 3 oder dem Energiespeicher 43 gespeist werden können. Alternativ kann aber auch die Brennkraftmaschine 1 und die Generatoranordnung 3 entfallen.

## Patentansprüche

1. Antriebsanordnung für ein Kraftfahrzeug umfassend mehrere drehfest mit gesonderten Antriebsrädern (13) des Kraftfahrzeugs gekuppelte, über einen Gleichspannungszwischenkreis (7) aus einer drehfest mit einer Brennkraftmaschine (1) gekuppelte Generatoranordnung (3) oder/und einem Energiespeicher (43), insbesondere einem Akkumulator gespeiste Elektromotore (11), wobei die Elektromotore (11) einen Stator mit einer Vielzahl in Umfangsrichtung gegeneinander versetzter Statorwicklungen und einen Rotor mit einer Vielzahl in Umfangsrichtung gegeneinander versetzter Permanentmagnete aufweisen und die Statorwicklungen an den Gleichspannungszwischenkreis (7) über gesonderte, den einzelnen Elektromotoren (11) zugeordnete, elektronische Kommutierungsschaltungen (5, 9) angeschlossen sind, die zur Steuerung der zeitlichen Reihenfolge der in den Statorwicklungen fließenden Ströme zeitlich versetzte Impulssignale erzeugen, wobei ferner jede Kommutierungsschaltung. (5, 9) einen an dem Elektromotor (11) angeordneten Stellungsgeber (15, 17) aufweist, der die Relativstellung des Rotors bezogen auf den Stator erfaßt und der die Erzeugungszeitpunkte der Impulssignale steuert,
dadurch gekennzeichnet,
daß an die Kommutierungsschaltung (9) wenigstens eines der Elektromotore (11) eine Drehzahlermittlungsschaltung (31, 17) angeschlossen ist, die auf die Impulssignale der Kommutierungsschaltung (5, 9) anspricht und ein die Drehzahl des Antriebsrads (13) repräsentierendes Drehzahlsignal und/oder ein den Drehwinkel des Antriebsrads repräsentierendes Drehwinkelsignal erzeugt,
daß die Drehzahlermittlungsschaltung (31, 37) Berechnungsmittel, insbesondere Interpolations- und/oder Extrapolationsmittel (39, 41), umfaßt, die zusätzliche Werte des Drehzahlsignals oder des Drehwinkelsignals abhängig von durch die Impulssignale festgelegten Signal-Stützwerten errechnen, und daß die Drehzahlermittlungsschaltungen (31, 37) der Antriebsräder (13) an ein Antiblockiersystem (ABS) und/oder an ein Antriebsschlupfregelsystem (ASR) angeschlossen sind.

2. Antriebsanordnung nach Anspruch 1,
dadurch gekennzeichnet,
daß das Antiblockiersystem und/oder das Antriebsschlupfregelsystem die Änderungsgeschwindigkeit des Drehzahlsignals überwacht und aktivierbar ist, wenn die Änderungsgeschwindigkeit des Drehzahlsignals einer der Drehzahlermittlungsschaltungen (31, 37) einen vorgegebenen Grenzwert übersteigt.

3. Antriebsanordnung nach Anspruch 2,
dadurch gekennzeichnet,
daß das Antiblockiersystem und/oder das Antriebsschlupfregelsystem die Größe der Drehzahländerung pro Zeittaktintervall erfaßt.

4. Antriebsanordnung nach einem der Ansprüche 1 bis 3,
dadurch gekennzeichnet,
daß das Antriebsschlupfregelsystem Regelmittel umfaßt, die den Radschlupf auf einen vorgegebenen Schlupfgrenzwert regeln.

## Claims

1. A drive arrangement for a motor vehicle, comprising a plurality of non-rotational electric motors (11) coupled to separate drive wheels (13) of the motor vehicle and fed via a constant-voltage D.C. link (7) from a generator arrangement (3) coupled non-rotationally to an internal combustion engine (1) and/or an energy store (43), in particular a battery, wherein the electric motors (11) have a stator with a plurality of stator windings offset relative to each other in the peripheral direction and a rotor having a plurality of permanent magnets offset relative to each other in the peripheral direction and the stator windings are connected to the constant-voltage D.C. link (7) via separate electronic commutation circuits (5, 9) which are associated with the individual electric motors (11), which circuits generate pulse signals staggered over time for controlling the sequence over time of the currents flowing in the stator windings, wherein furthermore each commutation circuit (5, 9) has a position indicator (15, 17) arranged on the electric motor (11), which position indicator detects the position of the rotor relative to the stator and which controls the times at which the pulse signals are generated,
characterised in that
a speed-determining circuit (31, 37) is connected to the commutation circuit (9) of at least one of the electric motors (11), which former circuit responds to the pulse signals of the commutation circuit (5, 9) and generates a speed signal which represents the speed of rotation of the drive wheel (13) and/or an angle-of-rotation signal which represents the angle of rotation of the drive wheel,
that the speed-determining circuit (31, 37) comprises calculating means, in particular interpolation and/or extrapolation means (39, 41), which calculate additional values of the speed signal or of the angle-of-rotation signal dependent on signal support values set by the pulse signals, and that the speed-determining circuits (31, 37) of the drive wheels (13) are connected to an anti-lock braking system (ABS) and/or to a drive slip regulating system (ASR).

2. A drive arrangement according to Claim 1, characterised in that the anti-lock braking system and/or the drive slip regulating system monitors the rate of change of the speed signal and can be activated if the rate of change of the speed signal of one of the speed-determining circuits (31, 37) exceeds a given limit value.

3. A drive arrangement according to Claim 2, characterised in that the anti-lock braking system and/or the drive slip regulating system detects the amount of the change in speed per time interval.

4. A drive arrangement according to one of Claims 1 to 3, characterised in that the drive slip regulating system comprises regulating means which regulate the wheel slippage to a given slippage limit value.

## Revendications

1. Agencement d'entraînement pour un véhicule automobile, comportant plusieurs moteurs électriques (11) couplés de façon solidaire en rotation avec des roues d'entraînement particulières (13) du véhicule automobile et alimentés, via un circuit intermédiaire à tension continue (7), à partir d'un agencement de générateur (3), couplé de façon solidaire en rotation à une machine à combustion interne (1), et/ou d'une réserve d'énergie (43), en particulier un accumulateur, les moteurs électriques (11) présentant un stator avec une pluralité d'enroulements du stator décalés les uns par rapport aux autres en direction périphérique et un rotor avec une pluralité d'aimants permanents décalés les uns par rapport aux autres en direction périphérique, et les enroulements du stator étant raccordés au circuit intermédiaire à tension continue (7) par des circuits de commutation électroniques particuliers (5,9), associés aux moteurs individuels (11), qui engendrent des impulsions décalées dans le temps pour commander la succession temporelle des courants s'écoulant dans les enroulements du stator, chaque circuit de commutation (5,9) présentant de plus un transmetteur de position (15,17) agencé sur le moteur électrique (11), qui détecte la position relative du rotor par rapport au stator et qui commande les moments de génération des impulsions,
caractérisé en ce qu'un circuit de détection de vitesse de rotation (31,37) est raccordé au circuit de commutation (9) d'au moins un des moteurs électriques (11), circuit (31,37) qui réagit aux impulsions du circuit de commutation (5,9) et engendre un signal de vitesse de rotation représentant la vitesse de rotation de la roue d'entraînement (13) et/ou un signal d'angle de rotation représentant l'angle de rotation de la roue d'entraînement, en ce que le circuit de détection de vitesse de rotation (31,37) comporte des moyens de calcul, en particulier des moyens d'interpolation et/ou des moyens d'extrapolation (39,41), qui calculent des valeurs supplémentaires du signal de vitesse de rotation ou du signal d'angle de rotation de façon dépendant de valeurs de support de signaux déterminées par les impulsions, et en ce que les circuits de détection de vitesse de rotation (31,37) des roues d'entraînement (13) sont raccordés à un système anti-blocage (ABS) et/ou à un système de régulation de patinage (ASR).

2. Agencement d'entraînement selon la revendication 1,
caractérisé en ce que le système anti-blocage et/ou le système de régulation de patinage surveillent la vitesse de modification du signal de vitesse de rotation et peuvent être activés lorsque la vitesse de modification du signal de vitesse de rotation d'un des circuits de détection de vitesse de rotation (31,37) dépasse une valeur limite prédéfinie.

3. Agencement d'entraînement selon la revendication 2,
caractérisé en ce que le système anti-blocage et/ou le système de régulation de patinage détectent la valeur de modification de la vitesse de rotation par intervalle de cycle temporel.

4. Agencement d'entraînement selon une des revendications 1 à 3,
caractérisé en ce que le système de régulation de patinage comporte des moyens de réglage qui règlent le patinage des roues à une valeur limite de patinage prédéfinie.
